# EUROPEAN PATENT SPECIFICATION

(11) **EP 1 613 162 B1**
(45) Date of publication and mention of the grant of the patent: **02.11.2011**
(21) Application number: 04723112.1
(22) Date of filing: 24.03.2004
(51) Int. Cl.: A21C 3/02, A21C 3/06

(54) **DEVICE FOR FORMING A DOUGH PORTION**
VORRICHTUNG ZUM FORMEN EINES TEIGSTÜCKES.
DISPOSITIF POUR FORMER UNE PORTION DE PATE

(30) Priority: 24.03.2003 NL 1023001
(43) Date of publication of application: 11.01.2006
(73) Proprietor: Kaak, Johan Hendrik Bernard, 7011 DZ Gaanderen (NL)
(72) Inventor: PASCH, Lothar, NL-7061 WV Terborg (NL)
(74) Representative: Nederlof, Etienne C.
(86) International application number: PCT/NL2004/000200
(87) International publication number: WO 2004/084635

(56) References cited:
- EP-A- 0 250 246
- EP-A- 0 372 879
- EP-A- 0 551 177
- EP-A- 1 198 989
- DE-A- 2 451 329
- DE-A- 4 402 346
- DE-C- 469 778
- FR-A- 1 073 015
- FR-A- 1 103 752
- FR-A- 2 656 500
- FR-A- 2 806 257
- GB-A- 647 424
- NL-C- 100 853
- US-A- 1 582 382
- US-A- 1 911 887
- US-A- 4 750 413
- US-A- 5 674 547

## Description

The invention relates to a device for forming a dough portion, particularly for rolling out the dough portion into a dough slice.

In a known device for forming a dough portion the dough portion in the shape of dough ball is passed between two rollers that roll out the ball into a flat dough slice. Said dough slice is rolled up into a dough strand in a next treatment.

The known device is provided with a small pressure roller and a large counter roller underneath it. The diameter ratio between the counter roller and the pressure roller is 4:1. In the course of time, this ratio experimentally proved to be a properly functioning ratio. The pressure roller is not placed straight above the counter roller, but slightly downstream of it. The operation is as follows. The supplied dough ball is placed on the counter roller, and is subsequently rolled out between the pressure roller and the counter roller. The dough slice remains stuck to the counter roller and is conveyed along with the counter roller over approximately 1/4 of the diameter. Subsequently the dough slice is peeled off from the counter roller by a peeling roller having a small diameter, that is placed close to the counter roller surface and rotates at high speed in the same direction of rotation as the counter roller. The side of the peeling roller oriented towards the counter roller thus carries out an opposite motion with respect to the side of the counter roller oriented towards the peeling roller, for peeling the dough slice off. The peeled off dough slice is subsequently deposited on a conveyor belt. Means for rolling up the dough slice into a dough strand are subsequently present on this conveyor belt.

A drawback of the known device is that the production capacity of this device is limited by the peeling roller. Too high a throughput speed of the dough may result in failures because the dough slice is not correctly peeled off from the counter roller.

A further drawback of the known device is that the dough slice has to be conveyed along with the counter roller. At high throughput speed, and thus high speed of rotation of the counter roller the dough slice may get detached from the counter roller as a result of the centrifugal force. Thus the position of the dough slice in the known device may vary as a result of which problems may arise in the further treatment of the dough slice.

EP 0 250 246 discloses a device for forming a dough portion comprising a pressure roller and a counter roller placed below the pressure roller for in between them rolling out the dough portion into a dough slice. This device comprises a supply conveyor belt which is passes through between the pressure roller and the counter roller and abuts the counter roller. Downstream of the counter roller a peeling roller is arranged for peeling off the dough slice from the supply conveyor and for transferring the dough slice onto a further conveyor belt.

DE 24 51 329 and FR1.103.752 disclose a device for forming a dough portion comprising a pressure roller and a counter roller placed below the pressure roller for in between them rolling out the dough portion into a dough slice. These devices comprise a conveyor belt which passes through between the pressure roller and the counter roller and abuts the counter roller. The conveyor belt is arranged for conveying and at least in the direction of conveyance supporting the dough slice to a further treatment device during and after rolling out.

It is an object of the present invention to at least improve on one of these aspects.

To that end the invention provides a device as described in claim 1.

The conveyor belt ensures a smooth transition between the rolling out and the further conveyance of the dough slice. As a result the process speed can be higher than in the known devices, as a result of which the production capacity of the device according to the invention can be higher. The dough portion is rolled out directly on the conveyor belt and subsequently the dough slice is lifted, or removed, from the counter roller by the conveyor belt, and conveyed further to a further treatment device. As the conveyor belt supports the dough slice over its entire length, as considered in process direction, the dough slice can be lifted from the counter roller in a reliable manner by the conveyor belt. As a result the throughput speed of the dough and thus the capacity of the device according to the invention can be higher than the known device's.

A further advantage of the device according to the invention is that the dough slice is supported by the conveyor belt immediately after rolling out. As a result the shape and the position of the dough slice in the device according to the invention is continuously controlled, as a result of which the process of forming the dough portion can be reproduced better:
- deviations in positioning arising in the known device by depositing the dough slice on the conveyor belt can be prevented.
- deviations in the shape of the dough slice arising in the known device when transferring the dough slice from the two rollers to the conveyor belt can be prevented. The dough namely tends to return to its original shape immediately after rolling out. During transfer in the known device the dough slice is not supported and may shrink unpredictably.

In a further development of the device according to the invention the conveyor belt supports the dough slice in the further treatment device. The conveyor belt continues into the further treatment device and the shape and position of the dough slice are continuously controlled.

In an embodiment the counter roller has a diameter that is, preferably several times, larger than the diameter of the pressure roller. The pressure roller can be placed downstream of a vertical plane through the centre line of the counter roller. The conveyor belt can be positioned for conveyance in downward inclined direction.

In a further embodiment the device comprises a feed conveyor with discharge end which considered in direction of conveyance is situated at a distance upstream of the pressure roller.

Preferably the further treatment device comprises a device for rolling up the dough slice. An advantage of this preferred embodiment is that the final part of the dough strand can be placed at a reproducible position. The final part of the dough strand is the point at the circumference of the dough strand where the end of the dough slice connects to the rolled up dough strand.

According to the invention, the conveyor belt is composed from a number of conveyor straps that are placed parallel and with intermediate space. Here as well the parallel and spaced apart conveyor straps ensure that the dough slice rolled out on the counter roller is released from the roller surface and is conveyed onwards in the direction of a circulating roller. The dough slice is now partially supported by the conveyor straps. Now as well a rolling-up device can be placed between the roller portion and the circulating roller.

According to the invention, the conveyor straps form a first belt conveyor, the device comprises a second belt conveyor, which comprises a number of further conveyor straps placed parallel and with intermediate space, wherein the conveyor straps of the first belt conveyor are situated between the conveyor straps of the second belt conveyor at the location of a transition from the first to the second belt conveyor. The use of a number of parallel and spaced apart conveyor straps, offers the opportunity to transfer the dough slice from a first conveyor device to a second conveyor device without the shape of the dough slice, at least in direction of conveyance, essentially changing among others due to for instance shrinking of the dough. Namely, by using the combination of a first and a second conveyor device according to this embodiment, the dough slice is continuously supported during the transfer from the first conveyor device to the second conveyor device. Said continuous support ensures that the shape of the dough slice hardly changes for instance because of shrinkage of the dough. A further treatment of the dough slice can now take place on the second conveyor device instead of on the first conveyor device. The second conveyor device here supports the dough slice in a further treatment device, such as for instance a rolling up device.

It is furthermore advantageous when the conveyor straps are cord-shaped or ribbon-shaped. Preferably the counter roller comprises grooves over its circumferential surface in which grooves the conveyor straps have been placed. Preferably the depth and the width of the grooves almost equal the thickness and the width of the conveyor straps, respectively, so that one closed flat surface is offered.

For keeping the grooves in the circumferential surface of the counter roller clean it is furthermore advantageous when the device in the circulation of the grooves comprises cleaning or scraping means for cleaning the grooves.

In an embodiment the surface of the conveyor straps for supporting the dough slice is adapted for, at least in the direction of conveyance, holding the dough slice. As a result possible shrinking of the dough slice, at least in direction of conveyance, is prevented.

Preferably the surface is provided with a texture. Preferably the texture comprises an undulated pattern and/or a series of notches. The texture can ensure an adhesion of the dough slice to the conveyor belt, which at least reduces the possibility of shrinking of the dough slice. Moreover said adhesion may ensure that the dough slice does not shift and that its position on the conveyor belt or conveyor straps is maintained.

It is furthermore advantageous when the device in the circulation of the conveyor straps comprises cleaning and/or scraping means for cleaning the conveyor straps.

The invention will be elucidated on the basis of exemplary embodiments shown in the attached drawings, in which:
Figure 1 shows a schematic view of a device for forming a dough portion not described in the claims;
Figure 2 shows a side view of the device of figure 1 provided with a device for rolling up a dough slice;
Figure 3 shows a schematic view of a device having a number of parallel and spaced apart conveyor straps that are connected to a further conveyor device;
Figure 4 shows a side view of the device of figure 3 wherein the further conveyor device is provided with a device for rolling up a dough slice; and
Figure 5 shows a partial cross-section of a counter roller provided with grooves over the circumferential surface.

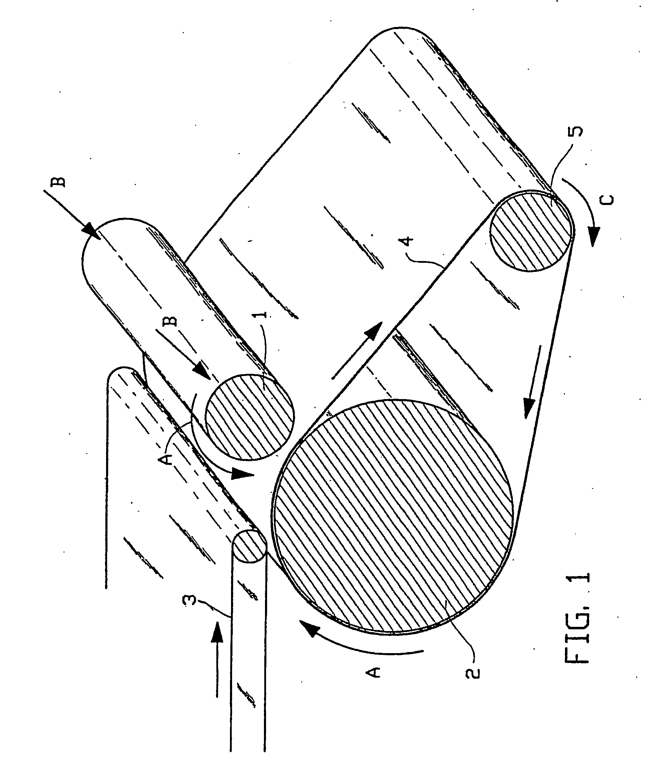

An exemplary embodiment as shown in figure 1 comprises a pressure roller 1 and a counter roller 2, which are both rotatably suspended in a frame (not shown). Said device serves for rolling out a dough ball which by means of the supply device 3 is supplied between the pressure roller 1 and the counter roller 2. The supply device 3 deposits the dough ball on the conveyor belt 4 which conveys the dough ball between the pressure roller 1 and the counter roller 2. As a result a smooth transition between the feeding of the dough ball and the rolling out into a dough slice is realised. The rollers 1, 2 are rotatable in the direction A. The pressure roller 1 is also movable along arrow B for adjusting the distance between the pressure roller 1 and the counter roller 2. The device is furthermore provided with a conveyor belt 4 which at one side runs about the counter roller 2, and at the other side runs about the circulating roller or tail pulley 5. A dough ball supplied by the supply device 3 is rolled out by the rollers 1, 2. The dough is rolled out here on the conveyor belt 4 instead of on the counter roller 2, as is the case in known devices. Behind the roller portion the conveyor belt 4 moves away from the counter roller 2, in the direction of the circulating roller 5 which is rotatable in the direction C. A dough slice will be conveyed along with the conveyor belt 4, as a result of which a smooth transition is realised between the rolling out and the conveying of the dough slice. Said conveyor belt 4 will support the dough slice from the moment the dough slice has been formed between the two rollers 1, 2. The material of the conveyor belt may be selected such so as to realise some kind of adhesion between the dough slice and the conveyor belt so that a possible shrinking of the dough slice is prevented. Moreover the position of the dough slice on the conveyor belt 4 can be maintained better due to this adhesion.

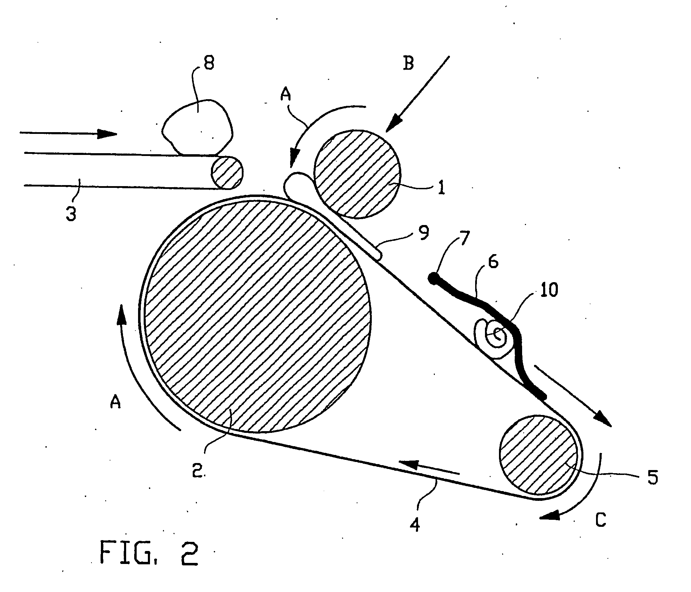

Downstream in the direction of the circulating roller 5 of the conveyor belt 4 a further device for treating the dough slice may be placed. Figure 2 shows a device for rolling up the dough slice that has been placed between the rollers 1, 2 and the circulating roller 5. Said rolling up device is for instance formed by a fine-meshed metal net 6 that is attached to a rod 7 above the conveyor belt 4. A dough slice that is moved between the conveyor belt 4 and the net 6, is rolled up by the net 6 from a dough slice 9 into a dough strand 10.

The operation of the device according to the invention is also shown in figure 2. A dough ball 8 is conveyed to the rollers 1, 2 by means of the supply device 3. Between said rollers 1, 2 the dough ball is rolled out into a dough slice 9. Said dough slice 9 is rolled up into a dough strand 10 downstream between the conveyor belt and the metal net 6.

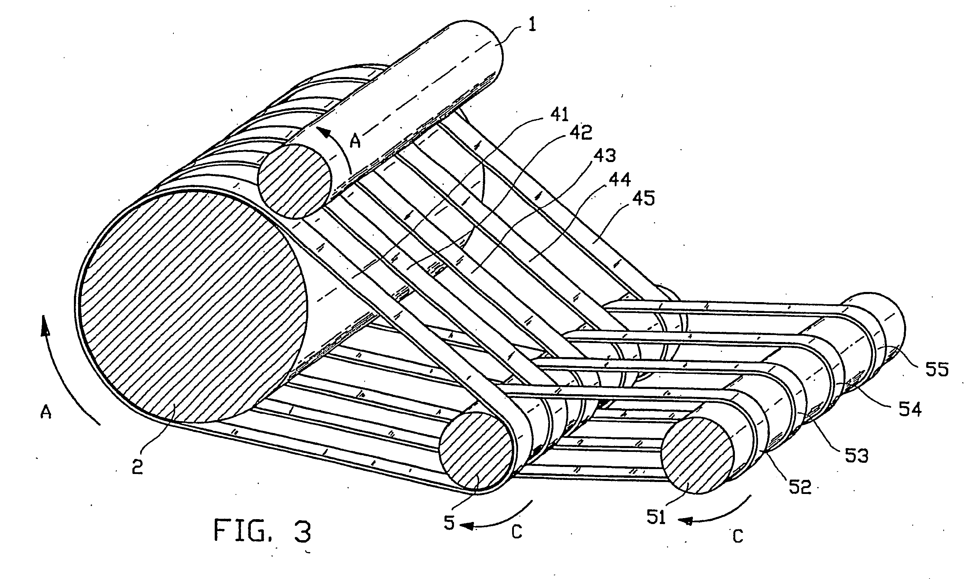

The conveyor belt 4, as shown in figure 1, extends over nearly the full width of the rollers 1, 2. In the exemplary embodiment of the device according to the invention as shown in figure 3, the conveyor belt is composed of a number of conveyor straps 41, 42, 43, 44 and 45 placed parallel and with intermediate space. The dough ball is now partially rolled out on said conveyor straps 41-45 and partially on the counter roller 2 by pressure roller 1. Preferably the counter roller is therefore provided with grooves along its circumferential surface wherein the conveyor straps 41-45 have been placed, and wherein the depth and width of said grooves are almost equal to the thickness and width of the conveyor straps 41-45. In this way an at least practically continuous flat roll-out surface is realised. Behind the roller portion the conveyor straps 41-45 will take along the dough slice in the direction of the tail pulley 5.

The use of a number of parallel and spaced apart conveyor straps 41-45 offers the opportunity to transfer the dough slice from a first conveyor device, formed by the conveyor straps 41-45 circulating about the counter roller 2 and the tail pulley 5, to a second conveyor device formed by the conveyor straps 52-55 that circulate about the tail pulleys 5 and 51, which are rotatable in the direction C. In the transition from the first conveyor device to the second conveyor device at the location of the tail pulley 5, the conveyor straps 52-55 are placed between the conveyor straps 41-45 of the first conveyor device. At the location of the tail pulley 5 a dough slice will be supported both by the conveyor straps 41-45 and the conveyor straps 52-55. In this way a dough slice is continuously supported during the transfer from the first conveyor device to the second conveyor device, at least in direction of conveyance. This continuous support ensures that the shape and the place of the dough slice are continuously controllable. The further treatment of the dough slice can now also take place on the second conveyor device.

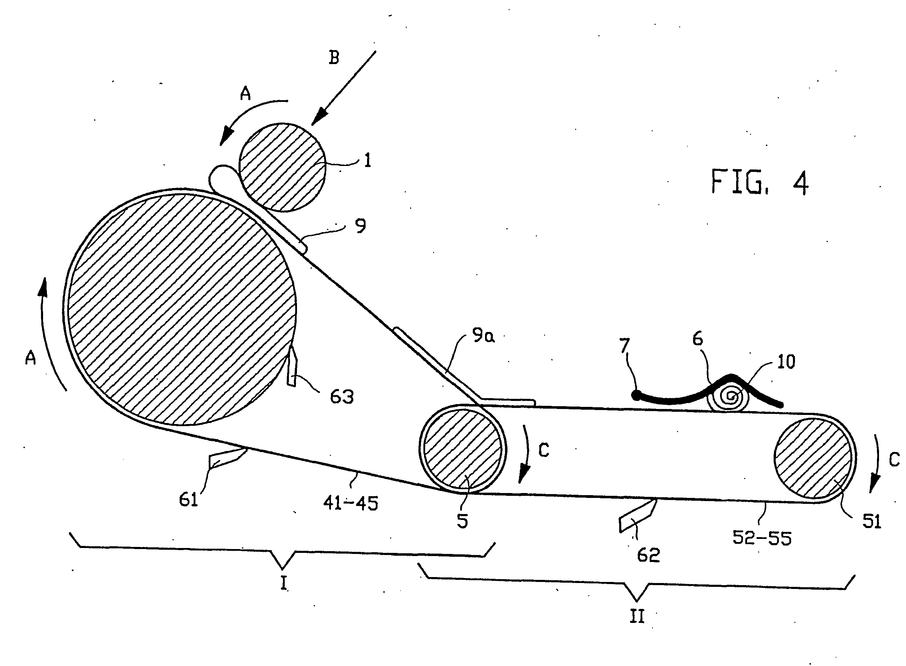

In figure 4 a side view is shown of the device of figure 3. A dough ball supplied between the rollers 1, 2 will be rolled out into a dough slice 9. Said slice is subsequently conveyed by the conveyor straps 41-45 in the direction of the tail pulley 5. At the location of the tail pulley 5 the dough slice 9a is transferred from the first conveyor device I to the second conveyor device II. In said second conveyor device II the dough slice is supported by the straps 52-55 and conveyed onwards in the direction of tail pulley 51. Above this second conveyor device II a device for rolling up the dough slice 9a is arranged. This rolling-up device in this example comprises a fine-meshed metal net 6 that is suspended above the conveyor straps 52-55 from a rod 7. Due to the motion of the conveyor straps 52-55 in combination with the metal net 6 the dough slice will be rolled up into a dough strand 10. The dough strand formed 10 can then be conveyed onwards for a further treatment. From figure 4 it appears that the dough slice from rolling out to after rolling up is continuously supported by the conveyor straps. As a result the process of rolling out and rolling up is better reproducible, and the process can be carried out such that the final part of the dough strand is reproducibly positioned at practically the same place of the dough strand.

In figure 4 cleaning and/or scraping means are furthermore shown for cleaning or scraping off the conveyor straps. Scraping blade 61 is placed in the circulation of the conveyor straps 41-45 of the first conveyor device I. The position of this scraping blade is not critical as long as it is placed downstream from the position where the dough slice 9a is transferred to the second conveyor device or another dough treatment machine. In the same manner the second conveyor device II is provided with a scraping blade 62 for scraping the conveyor straps 52-55 clean. Finally scraping blades 63 are arranged for cleaning the grooves and/or the roller surface of the counter roller 2. It will be clear that in case the conveyor belt extends over nearly the full width of the counter roller, the scrape blade 63 can be dispensed with.

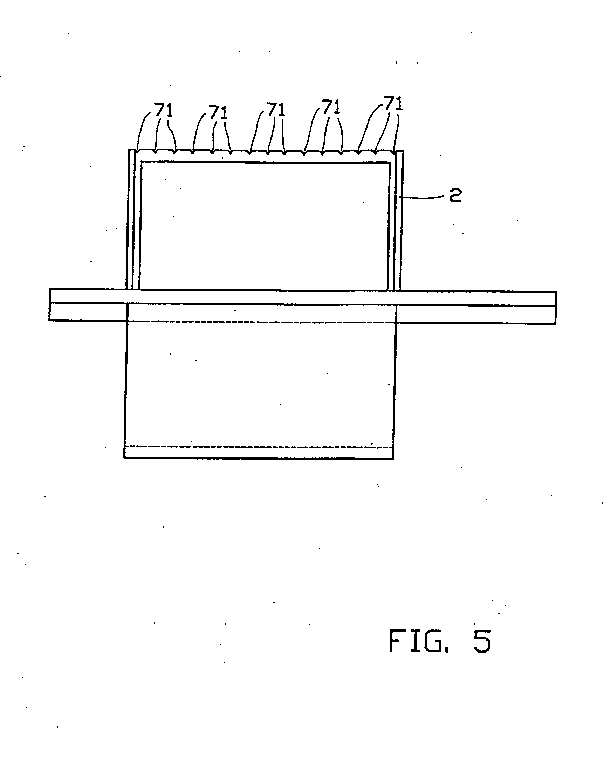

Figure 5 shows a cross-section of a counter roller 2 which over its circumferential surface has been provided with grooves 71. The grooves 71 in this exemplary embodiment have a V-shaped cross-section in which cords fit. The profile of the grooves 71 may of course be shaped differently. This profile is preferably adapted to the shape and the profile of the conveyor belt or conveyor straps. At a side facing away from the grooves said cords have a flat or textured surface. For compensating pressure when rolling out it is advantageous when the cords, at least at the location of the rolling out process, abut the counter roller 2 below in the grooves 71.

It will be clear that the exemplary embodiments of the invention described above are intended as an illustration of the invention and not as a limitation of the invention. An expert will certainly be capable of designing alternative embodiments that fall within the scope of protection of the attached claims.

For instance instead of a rolling up device, a device for cutting the dough slice into pieces can be placed. Because the dough slice in the device according to the invention is continuously supported from rolling out to this further treatment device the position of the dough slice in said treatment device can be reproduced better, as a result of which the dough slice can be cut into the desired pieces in a better reproducible manner.

When using a number of conveyor straps placed parallel and with intermediate space as shown in the figures 3 and 4, it is possible to connect a third or even further conveyor devices to each other such that the conveyor straps of two adjacent conveyor devices circulate over a same circulating roller or tail pulley, wherein the conveyor straps of the one belt conveyor are situated between the conveyor straps of the other belt conveyor, as shown in the figures 3 and 4. In this way the dough portion can be continuously supported during the entire treatment.

## Claims

1. Device for forming a dough portion comprising a pressure roller (1) and a counter roller (2) placed below it for in between them rolling out the dough portion into a dough slice (9a), wherein the device comprises a conveyor belt (41,42,43,44,45) for conveying and at least in the direction of conveyance supporting the dough slice (9a) to a further treatment device (7,6) during and after rolling out, wherein the conveyor belt (41,42,43,44,45) is passed through between the pressure roller (1) and the counter roller (2) and abuts the counter roller, **characteized in that** the conveyor belt is composed from a number of conveyor straps (41,42,43,44,45,) that are placed parallel and with intermediate space, wherein the conveyor straps form a first belt conveyor (I) and wherein the device comprises a second belt conveyor (II), which comprises a number of further conveyor straps (52,53,54,55) parallel and with intermediate space, wherein the conveyor straps (41,42,43,44,45) of the first belt conveyor (I) are situated between the conveyor straps (52,53,54,55) of the second belt conveyor (II) at the location of the transition from the first to the second belt conveyor.

2. Device according to claim 1, wherein the counter roller (2) has a diameter that is, preferably several times, larger than the diameter of the pressure roller (1), wherein the pressure roller (1) preferably is placed downstream of a vertical plane through the centre line of the counter roller (2), wherein the conveyor belt (41-45) preferably is positioned for conveyance in downward inclined direction.

3. Device according to claim 2, furthermore comprising a feed conveyor (3) with discharge end which considered in direction of conveyance is situated at a distance upstream of the pressure roller (1).

4. Device according to claim 1, 2 or 3, wherein the conveyor belt (41-45) supports the dough slice (9a) in the further treatment device (7,6), wherein the further treatment device (7,6) preferably comprises a device for rolling up the dough slice.

5. Device according to any one of the preceding claims 1-4, wherein the conveyor straps are cord-shaped or ribbon-shaped.

6. Device according to claim 5, wherein the counter roller (2) comprises grooves (71) over its circumferential surface in which grooves the conveyor straps (41-45) have been placed, wherein the depth and the width of the grooves (71) preferably almost equal the thickness and the width of the conveyor straps (41-45).

7. Device according to claim 6, wherein the device in the circulation of the grooves (71) comprises cleaning or scraping means (63) for cleaning the grooves (71).

8. Device according to claim 5, 6 or 7, wherein the second belt conveyor supports the dough portion in a further treatment device.

9. Device according to any one of the preceding claims, wherein the counter roller (2) is adapted as a circulating roller for the the conveyor straps (41-45).

10. Device according to any one of the preceding claims, wherein the surface of the conveyor straps (41-45) for supporting the dough slice (9a) is adapted for, at least in the direction of conveyance, holding the dough slice, wherein the surface preferably is provided with a texture, wherein the texture preferably comprises an undulated pattern and/or a series of notches.

11. Device according to any one of the preceding claims, wherein the device in the circulation of the conveyor straps (41-45 ; 52-53) comprises cleaning and/or scraping means (61 ; 62) for cleaning the conveyor straps.

12. Assembly according to any one of the preceding claims,
wherein at the transition from the first (I) to the second (II) belt conveyor, the first blet conveyor and the second belt conveyor are wrapped around the same circulating roller (5), and the conveyor straps of the first (41-45) and second (52-53) belt conveyor are alternately placed next to each other.

## Patentansprüche

1. Vorrichtung zum Formen eines Teigstücks, umfassend:
eine Druckrolle (1) und eine darunter platzierte Gegenrolle (2), um zwischen ihnen das Teigstück zu einer Teigscheibe (9a) auszurollen, wobei die Vorrichtung ein Förderband (41, 42, 43, 44, 45) umfasst, um während des und
nach dem Ausrollen die Teigscheibe (9a) zu einer weiteren Behandlungsvorrichtung (7, 6) zu fördern und wenigstens in der Richtung des Förderns zu stützen, wobei das Förderband (41, 42, 43, 44, 45) zwischen der Druckrolle (1) und der Gegenrolle (2) hindurchgeführt wird und an der Gegenrolle anliegt,
**dadurch gekennzeichnet,**
**dass** das Förderband aus einer Anzahl von Förderriemen (41, 42, 43, 44, 45) besteht, welche parallel und mit einem Zwischenraum platziert sind,
wobei die Förderriemen einen ersten Bandförderer (I) bilden und wobei die Vorrichtung einen zweiten Bandförderer (I) umfasst, welcher eine Anzahl von weiteren Förderriemen (52, 53, 54, 55) umfasst, welche parallel und mit einem Zwischenraum platziert sind, wobei die Förderriemen (41, 42, 43, 44, 45) des ersten Bandförderers (I) zwischen den Förderriemen (52, 53, 54, 55) des zweiten Bandförderers (II) liegen, und zwar an der Stelle des Übergangs von dem ersten zu dem zweiten Bandförderer.

2. Vorrichtung nach Anspruch 1,
wobei die Gegenrolle (2) einen Durchmesser aufweist, welcher vorzugsweise mehrere Male größer als der Durchmesser der Druckrolle (1) ist, wobei die Druckrolle (1) einer vertikalen Ebene durch die Mittellinie der Gegenrolle (2) vorzugsweise nachgeordnet platziert ist,
wobei das Förderband (41 - 45) vorzugsweise in eine nach unten geneigten Richtung zum Fördern positioniert ist.

3. Vorrichtung nach Anspruch 2,
ferner umfassend einen Zufuhrförderer (3), welcher ein Ausgabeende aufweist, welches im Hinblick auf die Förderrichtung mit einem Abstand der Druckrolle (1) vorgelagert ist.

4. Vorrichtung nach Anspruch 1, 2 oder 3,
wobei das Förderband (41 - 45) die Teigscheibe (9a) in der weiteren Bearbeitungsvorrichtung (7, 6) stützt, wobei die weitere Bearbeitungsvorrichtung (7, 6) vorzugsweise eine Vorrichtung zum Aufrollen der Teigscheibe umfasst.

5. Vorrichtung nach einem der vorhergehenden Ansprüche 1 - 4,
wobei die Förderriemen strangförmig oder bandförmig sind.

6. Vorrichtung nach Anspruch 5,
wobei die Gegenrolle (2) Rillen (71) über ihre Umfangsfläche umfasst, in welchen Rillen die Förderriemen (41 - 45) platziert worden sind, wobei die Tiefe und die Breite der Rillen (71) der Dicke und der Breite der Förderriemen (41 - 45) vorzugsweise fast gleich sind.

7. Vorrichtung nach Anspruch 6,
wobei die Vorrichtung in dem Umlauf der Rillen (71) Reinigungs- oder Schabemittel (63) zur Reinigung der Rillen (71) umfasst.

8. Vorrichtung nach Anspruch 5, 6 oder 7,
wobei der zweite Bandförderer das Teigstück in einer weiteren Bearbeitungsvorrichtung stützt.

9. Vorrichtung nach einem der vorhergehenden Ansprüche,
wobei die Gegenrolle (2) als eine Umlaufrolle für die Förderriemen (41 - 45) eingerichtet ist.

10. Vorrichtung nach einem der vorhergehenden Ansprüche,
wobei die Fläche der Förderriemen (41 - 45) zum Stützen der Teigscheibe (9a) wenigsten in der Förderrichtung dazu angepasst ist, die Teigscheibe zu halten,
wobei die Fläche vorzugsweise mit einer Textur vorgesehen ist, wobei die Textur vorzugsweise ein gewelltes Muster oder/und eine Reihe von Aussparungen umfasst.

11. Vorrichtung nach einem der vorhergehenden Ansprüche,
wobei die Vorrichtung in dem Umlauf der Förderriemen (41 - 45; 52 - 55) Reinigungs- oder/und Schabemittel (61; 62) zur Reinigung der Förderriemen umfasst.

12. Anordnung nach einem der vorhergehenden Ansprüche,
wobei an dem Übergang von dem ersten (1) zu dem zweiten (II) Bandförderer der erste Bandförderer und der zweite Bandförderer um die gleiche umlaufende Rolle (5) herum gewickelt sind,
und die Förderriemen des ersten (41 - 45) und des zweiten (52 - 53) Bandförderers nebeneinander abwechselnd platziert sind.

## Revendications

1. Dispositif destiné à former une portion de pâte comprenant un rouleau presseur (1) et un contre-rouleau (2) placé sous celui-ci de façon à laminer entre ceux-ci la portion de pâte en une tranche de pâte (9a), dans lequel le dispositif comprend une courroie transporteuse (41, 42, 43, 44, 45) destinée à transporter et à supporter au moins dans la direction du transport, la tranche de pâte (9a) vers un autre dispositif de traitement (7, 6) pendant et après le laminage, dans lequel la courroie transporteuse (41, 42, 43, 44, 45) passe à travers entre le rouleau presseur (1) et le contre-rouleau (2) et vient en butée contre le contre-rouleau, **caractérisé en ce que** :
la courroie transporteuse se compose d'un certain nombre de bandes transporteuses (41, 42, 43, 44, 45) qui sont disposées parallèles et séparées par un espace intermédiaire ;
dans lequel les bandes transporteuses forment un premier transporteur à courroie (I) et dans lequel le dispositif comprend un second transporteur à courroie (II), qui comprend un certain nombre d'autres bandes transporteuses (52, 53, 54, 55) disposées parallèles et séparées par un espace intermédiaire, dans lequel les bandes transporteuses (41, 42, 43, 44, 45) du premier transporteur à courroie (I) se situent entre les bandes transporteuses (52, 53, 54, 55) du second transporteur à courroie (II) au niveau de l'emplacement de la transition entre les premier et second transporteurs à courroie.

2. Dispositif selon la revendication 1, dans lequel le contre-rouleau (2) présente un diamètre qui est supérieur, de préférence plusieurs fois, au diamètre du rouleau presseur (1), dans lequel le rouleau presseur (1) est placé de préférence en aval d'un plan vertical qui passe par la ligne centrale du contre-rouleau (2), dans lequel la courroie transporteuse (41 - 45) est positionnée de préférence pour le transport dans une direction inclinée vers le bas.

3. Dispositif selon la revendication 2, comprenant en outre un transporteur d'alimentation (3) dont l'extrémité d'évacuation par rapport à la direction du transport, se situe à une certaine distance en amont du rouleau presseur (1).

4. Dispositif selon l'une quelconque des revendications 1, 2 ou 3, dans lequel la courroie transporteuse (41 - 45) supporte la tranche de pâte (9a) dans un autre dispositif de traitement (7, 6), dans lequel l'autre dispositif de traitement (7, 6) comprend de préférence un dispositif destiné à enrouler la tranche de pâte.

5. Dispositif selon l'une quelconque des revendications précédentes 1 - 4, dans lequel les bandes transporteuses présentent de préférence une forme de corde ou de ruban.

6. Dispositif selon la revendication 5, dans lequel le contre-rouleau (2) comprend des rainures (71) sur sa surface circonférentielle, rainures dans lesquelles les bandes transporteuses (41 - 45) ont été placées, dans lequel la profondeur et la largeur des rainures (71) sont de préférence presque égales à l'épaisseur et à la largeur des bandes transporteuses (41 - 45).

7. Dispositif selon la revendication 6, dans lequel le dispositif, dans la circulation des rainures (71), comprend des moyens de nettoyage ou de raclage (63) destinés à nettoyer les rainures (71).

8. Dispositif selon l'une quelconque des revendications 5, 6 ou 7, dans lequel le second transporteur à courroie supporte la portion de pâte dans un autre dispositif de traitement.

9. Dispositif selon l'une quelconque des revendications précédentes, dans lequel le contre-rouleau (2) est adapté comme un rouleau de circulation des bandes transporteuses (41 - 45).

10. Dispositif selon l'une quelconque des revendications précédentes, dans lequel la surface des bandes transporteuses (41 - 45) destinées à supporter la tranche de pâte (9a) est adaptée de façon à tenir, au moins dans la direction du transport, la tranche de pâte, dans lequel la surface est dotée de préférence d'une texture, dans lequel la texture comprend de préférence un motif ondulé et/ou une série d'encoches.

11. Dispositif selon l'une quelconque des revendications précédentes, dans lequel le dispositif comprend, dans la circulation des courroies de convoyeur (41 - 45 ; 52 - 55), les moyens de nettoyage et/ou de raclage (61 ; 62) destinés à nettoyer les bandes transporteuses.

12. Ensemble selon l'une quelconque des revendications précédentes, dans lequel, au niveau de la transition entre les premier (I) et second (II) transporteurs à courroie, le premier transporteur à courroie et le second transporteur à courroie sont enroulés autour du même rouleau de circulation (5), et les bandes transporteuses des premier (41 - 45) et second (52 - 55) transporteurs à courroie sont placées de manière alternée les unes à côté des autres.
